# EUROPEAN PATENT SPECIFICATION

(11) **EP 2 011 717 B1**
(45) Date of publication and mention of the grant of the patent: **06.01.2010**
(21) Application number: 08012002.5
(22) Date of filing: 03.07.2008
(51) Int. Cl.: B62B 7/08

(54) **Baby carriage**
Kinderwagen
Voiture d'enfant

(30) Priority: 03.07.2007 JP 2007175537
(43) Date of publication of application: 07.01.2009
(73) Proprietor: Aprica Children's Products Inc., Chuo-ku, Osaka-shi Osaka 542-0082 (JP)
(72) Inventor: Kassai, Kenzou, Osaka-shi, Osaka 542-0083 (JP); Ohnishi, Ichiro, Osaka-shi, Osaka 542-0082 (JP); Tanaka, Takanori, Osaka-shi, Osaka 542-0082 (JP)
(74) Representative: Prüfer & Partner GbR European Patent Attorneys

(56) References cited:
- EP-A- 0 271 422
- EP-A- 0 512 221
- WO-A-2006/031115
- GB-A- 2 379 955
- JP-A- 62 227 855

## Description

### BACKGROUND OF THE INVENTION

### Field of the Invention

The present invention relates to a baby carriage. More particularly, the present invention relates to a baby carriage implementing reduction in weight with a simple structure.

### Description of the Background Art

The applicant of the present invention disclosed a light-weight baby carriage in Japanese Patent Publication No. H07 (1995)-12824 of examined applications. This baby carriage is shown in Figs. 5 through 7.

The illustrated baby carriage includes, as a basic structure, a pair of front legs 3, 4 having front wheels 1, 2 at their respective lower parts, a pair of rear legs 7, 8 having rear wheels 5, 6 at their respective lower parts, a pair of seat support bars 9, 10, a pair of seat hanging bars 11, 12, a pair of push bars 13, 14, a front-leg connecting member 15 serving as width-direction connecting means for connecting the left and right sides of the baby carriage, a pair of cross bars 16, 17 serving as the width-direction connecting means, a hook 18 serving as opened-state lock means for locking an opened state of the baby carriage, and a pair of link bars 19, 20 serving as the opened-state lock means.

The front legs 3, 4 and the rear legs 7, 8 are provided so as to cross each other. The front legs 3, 4 and the rear legs 7, 8 are pivotally connected to each other at their crossing portions through pins 21, 22, respectively. Front parts of the seat support bars 9, 10 are pivotally connected to upper parts of the rear legs 7, 8 through pins 23, 24, respectively. Lower parts of the seat hanging bars 11, 12 are pivotally connected to rear parts of the seat support bars 9, 10 through pins 25, 26, respectively.

Lower parts of the push bars 13, 14 are pivotally connected to upper parts of the front legs 3, 4, through pins 27, 28, respectively. As shown in the figures, the push bars 13, 14 and the seat hanging bars 11, 12 cross each other. The push bars 13, 14 and the seat hanging bars 11, 12 are pivotally connected to each other at their crossing portions through pins 29, 30, respectively. Handles 38, 39 to be held by a person who pushes the baby carriage are provided at upper ends of the push bars 13, 14, respectively.

The front-leg connecting member 15 has its both ends pivotally connected to the front legs 3, 4, respectively. The front-leg connecting member 15 is foldable in the middle in the direction shown by arrow A. The pair of cross bars 16, 17 cross to form an X shape, and are pivotally connected at the crossing point through a pin 36. An upper end of one cross bar 16 is pivotally connected to the push bar 13 located on the right side, and a lower end of the cross bar 16 is pivotally connected to the rear leg 8 located on the left side. An upper end of the other cross bar 17 is pivotally connected to the push bar 14 located on the left side, and a lower end of the cross bar 17 is pivotally connected to the rear leg 7 located on the right side.

The front legs 3, 4 have front-leg sleeves 31, 32 that are slidable on the front legs 3, 4, respectively. The seat support bars 9, 10 have seat sleeves 33, 34 that are slidable on the seat support bars 9, 10, respectively. The front-leg sleeves 31, 32 slidably receive the front legs 3, 4, and the seat sleeves 33, 34 slidably receive the seat support bars 9, 10, respectively. The front-leg sleeves 31, 32 and the seat sleeves 33, 34 are pivotally connected to each other through pins, respectively.

In order to synchronize a slide operation of the seat sleeves 33, 34 with a folding operation of the front-leg connecting member 15, tension rods 40, 41 are provided between the seat sleeves 33, 34 and the front-leg connecting member 15, respectively.

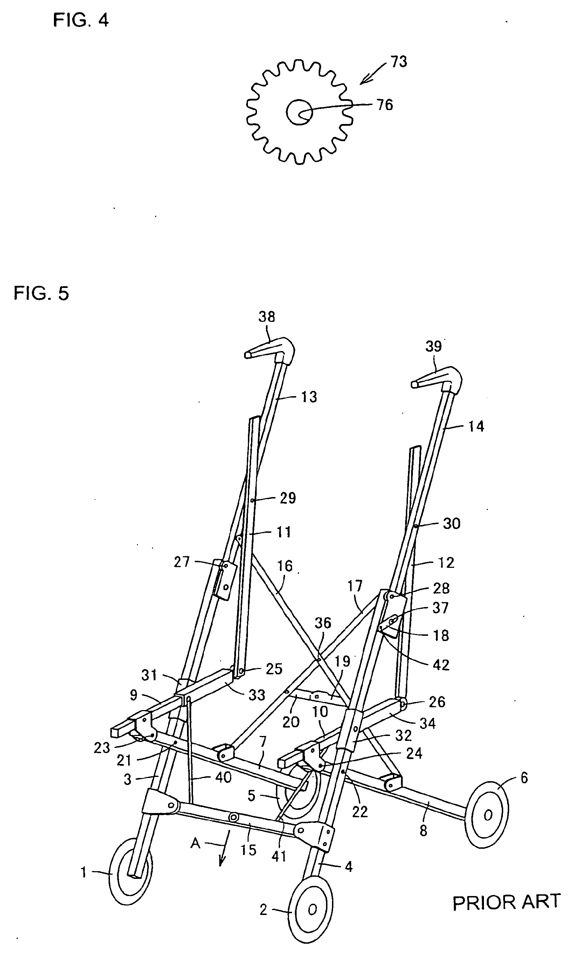

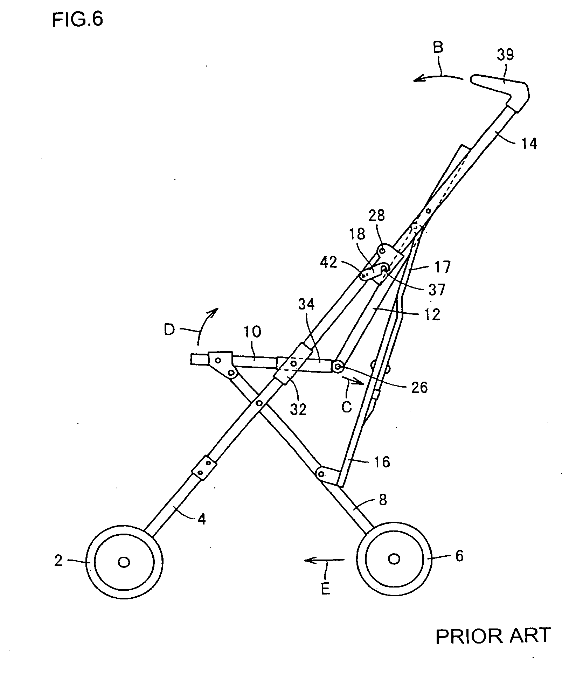

Figs. 5 and 6 show an opened state of the baby carriage. The hook 18 is provided in order to lock this opened state. The hook 18 is pivotally attached to the front leg 4 through a pin 42. The hook 18 inhibits pivoting of the push bar 14 with respect to the front leg 4 by engaging with an engaging pin 37 provided at a lower end of the push bar 14. The same hook is provided between the front leg 3 and the push bar 13 which are located on the right side of the baby carriage.

In order to fold the baby carriage, the hooks 18 are first pivoted to release a locked state between the front legs 3, 4 and the push bars 13, 14, respectively. The joint of the pair of link bars 19, 20 is then moved slightly upward to release a locked state between the pair of cross bars 16, 17. In this state, the push bars 13, 14 are pushed forward. As a result, the push bars 13, 14 are respectively pivoted around the pins 27, 28 as shown by arrow B in Fig. 6. With the pivoting of the push bars 13, 14, the pins 25, 26 (the joints of the seat supporting bars 9, 10 and the seat hanging bars 11, 12) move backward as shown by arrow C in Fig. 6. At this time, the seat support bars 9, 10 relatively slide in the seat sleeves 33, 34, respectively. Moreover, the seat support bars 9, 10 respectively pivot around the joints of the seat sleeves 33, 34 and the front-leg sleeves 31, 32, as shown by arrow D in Fig. 6. As a result, the rear wheels 5, 6 move toward the front wheels 1,2.

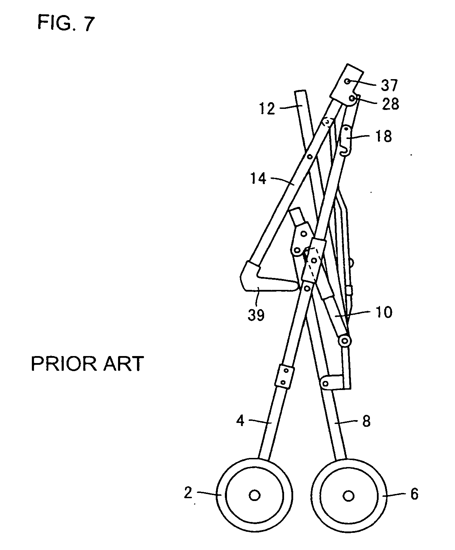

Fig. 7 shows a folded state of the baby carriage shown in Figs. 5 and 6. As shown in the figure, the front wheels 1, 2 and the rear wheels 5, 6 are located approximately at the same height, which enables self-standing of the baby carriage. In other words, the respective lengths and connecting positions of the front legs 3, 4, the rear legs 7, 8, the seat support bars 9, 10, the seat hanging bars 11, 12, the push bars 13, 14, and the width-direction connecting means are selected so as to achieve the above operation, that is, so that the rear wheels 5, 6 move toward the front wheels 1, 2 in the folding operation of the baby carriage and that the rear wheels 5, 6 and the front wheels 1, 2 are located approximately at the same height in the folded state of the baby carriage to enable self-standing of the baby carriage.

The baby carriage disclosed in Japanese Patent Publication No. H07-12824 has a basic structure that enables reduction in weight with a simple structure, but there still is room for improvement. Basically, the opened state of the baby carriage is locked by engaging the hooks 18 attached to the upper parts of the front legs 3, 4 with the engaging pins 37 provided in the lower part of the push bars 13, 14, respectively.

As can be seen from Fig. 6 that shows the opened state of the baby carriage, the hook 18 and the engaging pin 37 are located lower than the pin 28 that pivotally connects the front leg 4 and the push bar 14 to each other. Therefore, in the folded state of the baby carriage shown in Fig. 7, the push bar 14 is bent forward and the lower end of the push bar 14 protrudes above the upper end of the front leg 4. Such protrusion of the lower end of the push bar 14 increases the height of the baby carriage in the folded state.

Moreover, when the baby carriage is changed from the folded state of Fig. 7 to the opened state of Fig. 6, the lower end of the push bar 14 and the upper end of the front leg 4 gradually approach each other so as to reduce the gap therebetween. Therefore, fingers and clothes might be pinched between the push bar 14 and the front leg 4.

### SUMMARY OF THE INVENTION

It is an object of the present invention to provide a baby carriage capable of implementing reduction in weight with a simple structure, of reducing the height of the baby carriage in a folded state, and of avoiding problems such as pinched fingers.

According to the present invention, a baby carriage in which rear wheels move toward front wheels in a folding operation, and the rear wheels and the front wheels are located approximately at a same height in a folded state to enable self-standing of the baby carriage. The baby carriage includes: a pair of front legs extending in an up-down direction and having front wheels in their respective lower parts; a pair of rear legs extending in the up-down direction, having rear wheels in their respective lower parts, and provided so as to cross the front legs and pivotally connected to the front legs at the crossing portions through pins, respectively; a pair of seat support bars extending in a front-back direction and having their respective front parts pivotally connected to upper parts of the rear legs; a pair of seat hanging bars extending in the up-down direction and having their respective lower parts pivotally connected to rear parts of the seat support bars; a pair of push bars extending in the up-down direction so as to cross the seat hanging bars, having their respective lower ends pivotally connected to upper ends of the front legs through pivot shafts, and pivotally connected to the seat hanging bars at the crossing portions, respectively; width-direction connecting means formed by each front leg, each rear leg, each seat support bar, each seat hanging bar, and each push bar for connecting left and right sides of the baby carriage; and opened/closed state lock means for locking an opened state and closed state of the baby carriage by inhibiting pivoting of the push bars with respect to the front legs.

The baby carriage of the present invention is different from that disclosed in Japanese Patent Publication No. H07-12824 in that the opened/closed state lock means includes a front-leg-side engaging recess, a push-bar-side engaging recess, a lock member, a biasing member, and a press member. The front-leg-side engaging recess is located on the upper end of each front leg and provided along a circle around the pivot shaft as one or more recesses. The push-bar-side engaging recess is located on the lower end of each press bar and provided along a circle around the pivot shaft as one or more recesses. The lock member has an engaging protrusion for engaging with the front-leg-side engaging recess and the push-bar-side engaging recess. The lock member is provided displaceably between a first position and a second position along the pivot shaft. When in the first position, the lock member engages both the front-leg-side engaging recess and the push-bar-side engaging recess to inhibit pivoting of the push bar with respect to the front leg. When in the second position, the lock member engages only one of the front-leg-side engaging recess and the push-bar-side engaging recess to allow pivoting of the push bar with respect to the front leg. The biasing member biases the lock member toward the first position. The press member is provided to move the lock member to the second position against biasing force of the biasing member.

According to the present invention having the above structure, each element of the opened/closed state lock means is arranged around each pivot shaft pivotally connecting the front leg and the push bar. Therefore, the lower ends of the push bars do not protrude above the upper ends of the front legs in the folded state of the baby carriage, enabling reduction in height of the baby carriage in the folded state. Moreover, since the lower ends of the push bars and the upper ends of the front legs are always in contact with each other and are not separated from each other both in the opened state and folded state of the baby carriage. Therefore, problems such as pinched fingers and clothes do not occur.

In one preferred embodiment, the lock member has a gear shape centering around the pivot shaft, and the front-leg-side engaging recess and the push-bar-side engaging recess have a gear-shaped recess centering around the pivot shaft.

Preferably, the baby carriage of the present invention further includes a stopper for inhibiting a pressing operation of the press member in order to prevent the opened state and folded state of the baby carriage from being unlocked accidentally or unintentionally. In one embodiment, the press member has a cylindrical shape surrounding the pivot shaft and is held displaceably in a through hole formed in the lower end of the push bar. The stopper is held by the press member so as to be displaceable between a position where the stopper protrudes from an outer peripheral surface of the press member and a position where the stopper retracts in the outer peripheral surface of the press member. When in the protruding position, the stopper inhibits the pressing operation of the press member. The stopper is biased toward the protruding position by a spring.

### BRIEF DESCRIPTION OF THE DRAWINGS

Fig. 1 is a side view showing a baby carriage according to an embodiment of the present invention;
Fig. 2 is a side view showing a folded state of the baby carriage according to the embodiment of the present invention;
Figs. 3A, 3B and 3C are cross-sectional views showing opened/closed state lock means, wherein Fig. 3A shows a state in which an opened state or closed state of the baby carriage is locked, Fig. 3B shows a state in which a pressing operation of a press member is allowed, and Fig. 3C shows a state in which a pivoting operation of a push bar is allowed;
Fig. 4 is a front view of a lock member;
Fig. 5 is a perspective view of a baby carriage disclosed in Japanese Patent Publication No. H07-12824;
Fig. 6 is a side view of the baby carriage disclosed in Japanese Patent Publication No. H07-12824; and
Fig. 7 is a side view showing a folded state of the baby carriage disclosed in Japanese Patent Publication No. H07-12824.

### DESCRIPTION OF THE PREFERRED EMBODIMENTS

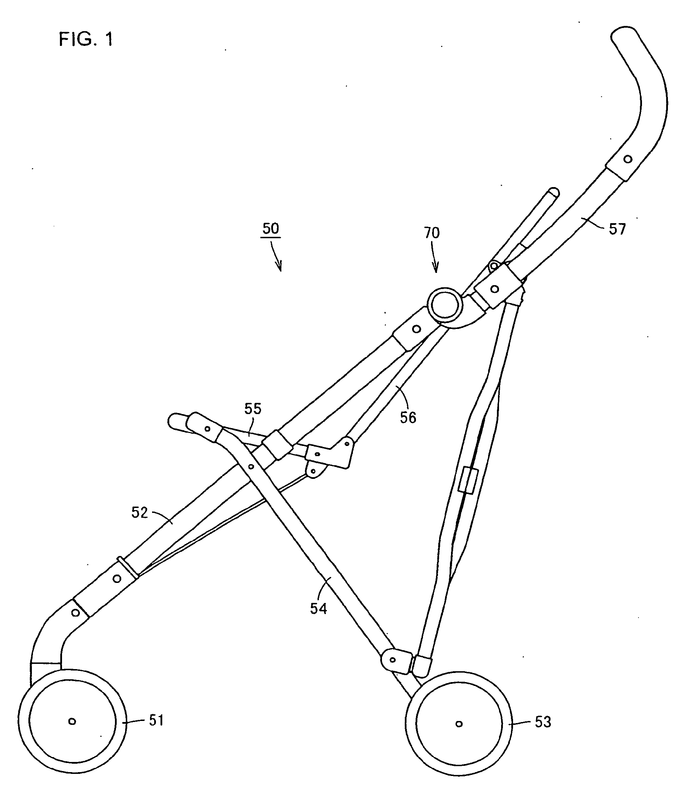

A baby carriage according to the present invention has substantially the same basic structure, folding mechanism and the like as those of the baby carriage disclosed in Japanese Patent Publication No. H07-12824. Accordingly, description thereof will be omitted. The baby carriage according to the present invention is different from the baby carriage disclosed in Japanese Patent Publication No. H07-12824 in the structure of opened/closed state lock means. Hereinafter, a characteristic structure of the present invention will be described with reference to Figs. 1 through 4.

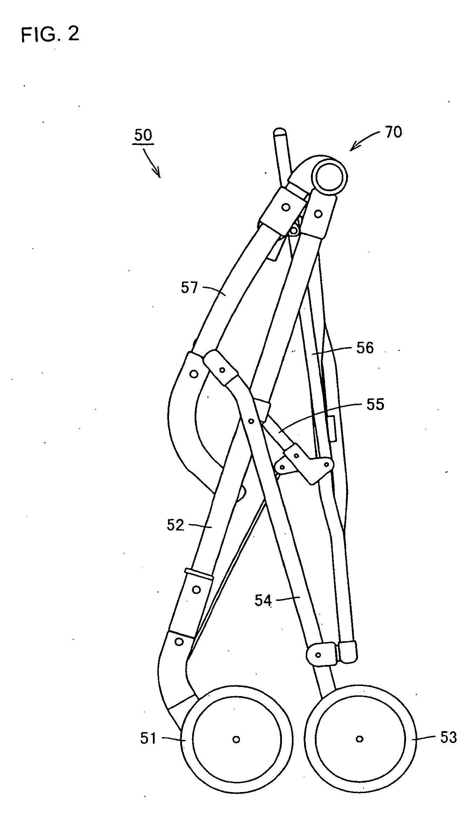

In a folding operation of a baby carriage 50 shown in Figs. 1 and 2, rear wheels 53 move toward front wheels 51. In a folded state, the rear wheels 53 and the front wheels 51 are located approximately at the same height, enabling self-standing of the baby carriage.

Like the baby carriage disclosed in Japanese Patent Publication No. H07-12824, the baby carriage 50 includes, as a basic structure, a pair of front legs 52, a pair of rear legs 54, a pair of seat support bars 55, a pair of seat hanging bars 56, a pair of push bars 57, width-direction connecting means, and opened/closed state lock means 70. The front legs 52 extend in an up-down direction and have front wheels 51 at their respective lower parts. The rear legs 54 extend in the up-down direction and have rear wheels 53 at their respective lower parts. The rear legs 54 are provided so as to cross the front legs 52, and are pivotally connected to the front legs 52 at their crossing portions through pins, respectively. The seat support bars 55 extend in a front-back direction, and front parts of the seat support bars 55 are pivotally connected to upper parts of the rear legs 54, respectively. The seat hanging bars 56 extend in the up-down direction, and lower parts of the seat hanging bars 56 are pivotally connected to rear parts of the seat support bars 55, respectively. The push bars 57 extend in the up-down direction and respectively cross the seat hanging bars 56. Lower ends of the push bars 57 are pivotally connected to upper ends of the front legs 52 through pivot shafts, respectively. The push bars 57 are pivotally connected to the seat hanging bars 56 at their crossing portions, respectively. The width-direction connecting means connects the left and right sides of the baby carriage, each of the left and right sides being formed by the front leg 52, the rear leg 54, the seat support bar 55, the seat hanging bar 56, and the push bar 57. The opened/closed state lock means 70 locks an opened state and closed state (folded state) of the baby carriage by inhibiting pivoting of the push bars 57 with respect to the front legs 52.

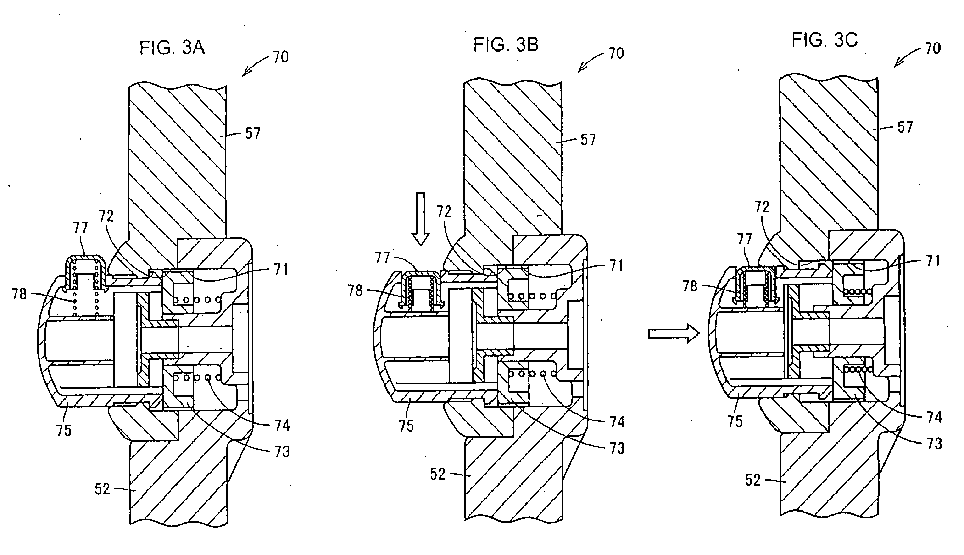

The illustrated embodiment is characterized in the structure of opened/closed state lock means 70. The opened/closed state lock means 70 will be described later in detail with reference to Figs. 3 and 4. The fact that the conventional problems are solved by providing the characteristic opened/closed state lock means 70 will now be described with reference to Figs. 1 and 2.

As can be seen from Figs. 1 and 2, each element of the opened/closed state lock means 70 is arranged around each pivot shaft that pivotally connects the respective front leg 52 with the respective push bar 57. Accordingly, in the folded state of the baby carriage shown in Fig. 2, the lower ends of the push bars 57 do not protrude above the upper ends of the front legs 52, whereby the height of the baby carriage in the folded state can be reduced. Moreover, the lower ends of the push bars 57 and the upper ends of the front legs 52 are always in contact with each other and are not separated from each other both in the opened and folded states of the baby carriage. Therefore, problems such as pinched fingers and clothes do not occur.

Each of Figs. 3A, 3B and 3C show a cross-sectional structure of the opened/closed state lock means 70. Illustration of the pivot shafts that respectively pivotally connect the front legs 52 with the push bars 57 is omitted in Figs. 3A to 3C. The opened/closed state lock means 70 locks the opened state of the baby carriage 50 shown in Fig. 1 and the closed state of the baby carriage 50 shown in Fig. 2 by inhibiting pivoting of the push bars 57 with respect to the front legs 52.

The opened/closed state lock means 70 includes a plurality of front-leg-side engaging recesses 71, a plurality of push-bar-side engaging recesses 72, a lock member 73, a biasing member 74, and a press member 75. The plurality of front-leg-side engaging recesses 71 are located on the upper end of each front leg 52 and provided along a circle around the pivot shaft. In the illustrated embodiment, the front-leg-side engaging recesses 71 are provided in the form of gear-like recesses centering around the pivot shaft. The plurality of push-bar-side engaging recesses 72 are located on the lower end of each press bar 57 and provided along a circle around the pivot shaft. In the illustrated embodiment, the push-bar-side engaging recesses 72 are provided in the form of gear-like recesses centering around the pivot shaft.

The lock member 73 has engaging protrusions that engage with the front-leg-side engaging recesses 71 and the push-bar-side engaging recesses 72, and are provided so as to be displaceable between a first position (Fig. 3A) and a second position (Fig. 3C) along the pivot shaft. In the illustrated embodiment, as shown in Fig. 4, the lock member 73 has a gear shape centering around a central hole 76 that receives the pivot shaft. In the first position shown in Fig. 3A, the lock member 73 engages with both the front-leg-side engaging recesses 71 and the push-bar-side engaging recesses 72 to inhibit pivoting of the push bar 57 with respect to the front leg 52. In the second position shown in Fig. 3C, on the other hand, the lock member 73 engages with only one of the front-leg-side engaging recesses 71 and the push-bar-side engaging recesses 72 to allow pivoting of the push bar 57 with respect to the front leg 52. In the illustrated embodiment, the lock member 73 in the second position engages only with the front-leg-side engaging recesses 71 and does not engage with the push-bar-side engaging recesses 72.

The biasing member 74 is a spring in the illustrated embodiment. The biasing member 74 biases the lock member 73 toward the first position (the position shown in Fig. 3A). The press member 75 is provided to move the lock member 73 to the second position (the position shown in Fig. 3C) against the biasing force of the biasing member 74 so that the push bar 57 can be pivoted with respect to the front leg 52.

In the illustrated embodiment, a stopper 77 for inhibiting a pressing operation of the press member 75 is provided to prevent the opened state or folded state of the baby carriage from being unlocked due to accidental or unintentional pressing of the press member 75. The illustrated press member 75 has a cylindrical shape surrounding the pivot shaft, and is held displaceably in a through hole formed in the lower end of the push bar 57. The stopper 77 is held by the press member 75 so as to be displaceable between a position where the stopper 77 protrudes from the outer peripheral surface of the press member 75 (a position shown in Fig. 3A) and a position where the stopper 77 retracts in the outer peripheral surface of the press member 75 (a position shown in Figs. 3B and 3C). The stopper 77 is always biased toward the protruding position by a spring 78.

When in the protruding position as shown in Fig. 3A, the stopper 77 abuts on an outer wall surface of the push bar 57 to prohibit the pressing operation of the press member 75. As shown in Figs. 3B and 3C, on the other hand, the pressing operation of the press member 75 is allowed when the stopper 77 is pressed back in the outer peripheral surface of the press member 75 against the biasing force of the spring 78.

Providing such a stopper 77 enables double locking of the opened state and closed state of the baby carriage 50. In other words, two operations, that is, first pressing down the stopper 77 and then pressing the press member 75, are required to unlock the opened state or closed state of the baby carriage 50. This is preferable in terms of safety. In the illustrated embodiment, the press-down direction of the stopper 77 and the pressing direction of the press member 75 cross each other at 90 degrees. Therefore, the two elements will not be pressed at the same time either accidentally or unintentionally, which is more preferable in terms of safety.

In the illustrated embodiment, the plurality of front-leg-side engaging recesses 71 and the plurality of push-bar-side engaging recesses 72 are provided around the pivot shaft. Therefore, both the opened state and closed state of the baby carriage can be locked. Note that, in the illustrated embodiment, the lock member has a gear shape centering around the pivot shaft. In another embodiment, however, the lock member may be in the form of a bar-shaped pin located on a circumference around the pivot shaft. In this case, in order to implement locking of both the opened state and closed state of the baby carriage, an engaging recess for receiving the tip of the lock pin is provided at two positions on a circumference of the pivot shaft in at least one of the upper end of the front leg and the lower end of the push bar. A lock pin that is biased by a spring and an engaging recess for receiving the base of the lock pin may be provided in the other of the upper end of the front leg and the lower end of the push bar.

Although not directly relating to the opened/closed state lock means 70 which is a characteristic of the present invention, a preferred structural characteristic of the embodiment of the present invention includes the fact that the height of a seating surface is higher than that of a conventional baby carriage. If the height of the seating surface of the baby carriage is low, reflected heat from a road surface or dust floating near the road surface may affect an infant or small child on the baby carriage. In a preferred embodiment, the height of the seating surface is set to about 50 cm, which is higher than a conventional baby carriage, in order to prevent reflected light and dust from the road surface from affecting an infant or small child on the baby carriage. By setting the height of the seating surface to about 50 cm, the distance between the eyes of an infant or small child on the baby carriage and the eyes of a parent is reduced, which facilitates exchange of affection through the eyes.

Although an embodiment of the present invention has been described above with reference to the figures, the present invention is not limited to the above described and illustrated embodiment. Various modifications and variations can be made to the above described and illustrated embodiment within the scope as defined in the claims.

The present invention is thus advantageously used in a baby carriage implementing reduction in weight with a simple structure.

## Claims

1. A baby carriage in which rear wheels move toward front wheels in a folding operation, and the rear wheels and the front wheels are located approximately at a same height in a folded state to enable self-standing of the baby carriage, comprising:
a pair of front legs (52) extending in an up-down direction and having front wheels (51) in their respective lower parts;
a pair of rear legs (54) extending in the up-down direction, having rear wheels (53) in their respective lower parts, and provided so as to cross said front legs (52) and pivotally connected to said front legs at the crossing portions through pins, respectively;
a pair of seat support bars (55) extending in a front-back direction and having their respective front parts pivotally connected to upper parts of said rear legs (54);
a pair of seat hanging bars (56) extending in the up-down direction and having their respective lower parts pivotally connected to rear parts of said seat support bars (55);
a pair of push bars (57) extending in the up-down direction so as to cross said seat hanging bars (56), having their respective lower ends pivotally connected to upper ends of said front legs (52) through pivot shafts, and pivotally connected to said seat hanging bars (56) at the crossing portions, respectively;
width-direction connecting means formed by said each front leg, each rear leg, each seat support bar (55), each seat hanging bar (56), and each push bar for connecting left and right sides of the baby carriage;
**characterized in that** it further comprises
opened/closed state lock means (70) for locking an opened state and closed state of the baby carriage by inhibiting pivoting of said push bars (57) with respect to said front legs (52), wherein
said opened/closed state lock means (70) includes
a front-leg-side engaging recess (71) located on the upper end of said each front leg (52) and provided along a circle around said pivot shaft,
a push-bar-side engaging recess (72) located on the lower end of said each push bar (57) and provided along a circle around said pivot shaft, and
a lock member (73) having an engaging protrusion for engaging with said front-leg-side engaging recess (71) and said push-bar-side engaging recess (72), and provided displaceably between a first position and a second position along said pivot shaft, wherein when in said first position, said lock member (73) engages both said front-leg-side engaging recess (71) and said push-bar-side engaging recess (72) to inhibit pivoting of said push bar (57) with respect to said front leg (52), and when in said second position, said lock member (73) engages only one of said front-leg-side engaging recess (71) and said push-bar-side engaging recess (72) to allow pivoting of said push bar (57) with respect to said front leg (52), said opened/closed state lock means (70) further includes
a biasing member (74) for biasing said lock member (73) toward said first position, and
a press member (75) for moving said lock member (73) to said second position against biasing force of said biasing member (74).

2. The baby carriage according to claim 1, wherein said lock member (73) has a gear shape centering around said pivot shaft, and said front-leg-side engaging recess (71) and said push-bar-side engaging recess (72) have a gear-shaped recess centering around said pivot shaft.

3. The baby carriage according to claim 1 or 2, further comprising a stopper (77) for inhibiting a pressing operation of said press member (75).

4. The baby carriage according to claim 3, wherein
said press member (75) has a cylindrical shape surrounding said pivot shaft and is held displaceably in a through hole formed in the lower end of said push bar (57), and
said stopper (77) is held by said press member (75) so as to be displaceable between a position where said stopper (77) protrudes from an outer peripheral surface of said press member (75) and a position where said stopper (77) retracts in the outer peripheral surface of said press member (75), and when in said protruding position, said stopper (77) inhibits the pressing operation of said press member (75), the baby carriage further comprising:
a spring (78) for biasing said stopper (77) toward said protruding position.

## Patentansprüche

1. Kinderwagen, in dem sich bei einem Klappvorgang Hinterräder zu Vorderrädern bewegen, wobei die Hinter- und die Vorderräder in einem zusammengeklappten Zustand ungefähr auf einer gleichen Höhe angeordnet sind, um ein alleiniges Stehen des Kinderwagens zu ermöglichen, wobei der Kinderwagen aufweist:
ein Vorderbeinpaar (52), das sich in einer Oben-Unten-Richtung erstreckt, und das in seinen jeweiligen unteren Teilen Vorderräder (51) aufweist;
ein Hinterbeinpaar (54), das sich in der Oben-Unten-Richtung erstreckt, das in seinen jeweiligen unteren Teilen Hinterräder (53) aufweist, und das derart vorgesehen ist, dass es die Vorderbeine (52) kreuzt, und, dass es an den Kreuzabschnitten jeweils durch Bolzen mit den Vorderrädern drehbar verbunden ist;
ein Sitztragestangenpaar (55), das sich in einer Vorne-Hinten-Richtung erstreckt und dessen jeweilige vordere Teile mit den oberen Teilen der Hinterbeine (54) drehbar verbunden sind;
ein Sitzhängestangenpaar (56), das sich in der Oben-Unten-Richtung erstreckt und dessen jeweilige untere Teile mit den hinteren Teilen der Sitztragestangen (55) drehbar verbunden sind;
ein Schiebestangenpaar (57), das sich jeweils in der Oben-Unten-Richtung erstreckt, so dass es die Sitz-Hängestangen (56) kreuzt, das seine jeweiligen unteren Enden mit den oberen Enden der Vorderbeine (52) durch Drehwellen drehbar verbunden sind, und das es bei den Kreuzabschnitten mit den Sitzeinhängestangen (56) jeweils drehbar verbunden ist;
Verbindungsmittel in der Breitenrichtung, das durch jedes Vorderbein, jedes Hinterbein, jede Sitztragestange (55), jede Sitzhängestange (56) und jede Schiebestange ausgebildet wird, zum Verbinden der linken und rechten Seite des Kinderwagens;
**dadurch gekennzeichnet, dass** er weiter aufweist
ein sich im geöffneten/ geschlossenen Zustand befindliches Verriegelungsmittel (70) zum Verriegeln eines geöffneten Zustands und eines geschlossenen Zustands des Kinderwagens durch Verhindern eines Drehens der Schiebestangen (57) bezüglich der Vorderbeine (52), wobei
das sich im geöffneten/ geschlossenen Zustand befindlichen Verriegelungsmittel (70) beinhaltet
eine Vorderbeinseiten-Eingriffsaussparung (71), die an dem oberen Ende von jedem Vorderbein (52) angeordnet ist, und die entlang eines Kreises um die Drehwelle vorgesehen ist,
eine Schiebestangenseiten-Eingriffsaussparung (72), die an dem unteren Ende jeder Schiebestange (57) angeordnet ist, und die entlang eines Kreises um die Drehwelle vorgesehen ist, und
eine Verriegelungseinheit (73), die einen Eingriffsvorsprung zum Eingreifen mit der Vorderbeinseiten-Eingriffsaussparung (71) und der Schiebestangenseiten-Eingriffsaussparung (72) aufweist und die zwischen einer ersten Position und einer zweiten Position entlang der Drehwelle verschiebbar vorgesehen ist, wobei die Verriegelungseinheit (73), wenn sie sich in der ersten Position befindet, sowohl mit der Vorderbeinseiten-Eingriffsaussparung (71) als auch mit der Schiebestangenseiten-Eingriffsaussparung (72) im Eingriff ist, um ein Drehen der Schiebestange (57) bezüglich des Vorderbeins (52) zu verhindern, und wobei die Verriegelungseinheit (73), wenn sie sich in der zweiten Position befindet, entweder mit der Vorderbeinseiten-Eingriffsaussparung (71) oder der Schiebestangenseiten-Eingriffsaussparung (72) im Eingriff ist, um ein Drehen der Schiebestange (57) bezüglich des Vorderbeins (52) zu ermöglichen, wobei sich das im geöffneten/ geschlossenen Zustand befindliche Verriegelungsmittel (70) ferner beinhaltet
eine Vorspanneinheit (74) zum Vorspannen der Verriegelungseinheit (73) zu der ersten Position, und
eine Presseinheit (75) zum Bewegen der Verriegelungseinheit (73) zu der zweiten Position gegen die Vorspannkraft der Vorspanneinheit (74).

2. Kinderwagen nach Anspruch 1, wobei die Verriegelungseinheit (73) eine Zahnradform aufweist, die um die Drehwelle zentriert ist, und wobei die Vorderbeinseiten-Eingriffsaussparung (71) und die Schiebestangenseiten-Eingriffsaussparung (72) eine zahnradförmige Aussparung aufweisen, die um die Drehwelle zentriert ist.

3. Kinderwagen nach Anspruch 1 oder 2, der ferner einen Stopper (77) zum Verhindern eines Pressvorgangs der Presseinheit (75) aufweist.

4. Kinderwagen nach Anspruch 3, wobei die Presseinheit (75) eine zylindrische Form aufweist, die die Drehwelle umschließt, und die in einem Durchgangsloch, das in dem unteren Ende der Schiebestange (57) ausgebildet ist, verschiebbar gehalten wird, und
wobei der Stopper (77) durch die Presseinheit (75) derart gehalten wird, dass er zwischen einer Position, in der der Stopper (77) von einer äußeren Randoberfläche der Presseinheit (75) hervorsteht, und einer Position, in der sich der Stopper (77) in die äußere Randbberfläche der Presseinheit (75) zurückzieht, verschiebbar ist, und wobei der Stopper (77), wenn er sich in der hervorstehenden Position befindet, den Pressvorgang der Presseinheit (75) verhindert, wobei der Kinderwagen ferner aufweist:
eine Feder (78) zum Vorspannen des Stoppers (77) zu der hervorstehenden Position.

## Revendications

1. Landau dans lequel les roues arrière se déplacent vers les roues avant lors d'une opération de pliage, et les roues arrière et les roues avant se trouvent approximativement à la même hauteur dans un état plié pour permettre l'auto-maintien du landau,
comprenant:
une paire de pieds avant (52) s'étendant dans une direction montante-descendante et ayant des roues avant (51) dans leurs parties inférieures respectives;
une paire de pieds arrière (54) s'étendant dans la direction montante-descendante, ayant des roues arrière (53) dans leurs parties inférieures respectives, et prévus de manière à se croiser avec lesdits pieds avant (52) et reliés de manière pivotante auxdits pieds avant au niveau des parties de croisement à travers des broches, respectivement;
une paire de barres (55) de soutien de siège s'étendant dans une direction avant-arrière et ayant leurs parties avant respectives reliées de manière pivotante à des parties supérieures desdits pieds arrière (54);
une paire de barres (56) de suspension de siège s'étendant dans la direction montante-descendante et ayant leurs parties inférieures respectives reliées de manière pivotante à des parties arrières desdites barres (55) de soutien de siège;
une paire de barres de poussée (57) s'étendant dans la direction montante-descendante de manière à se croiser avec lesdites barres (56) de suspension de siège, ayant leurs extrémités inférieures respectives reliées de manière pivotante à des extrémités supérieures desdits pieds avant (52) par le biais d'arbres de pivotement, et reliées de manière pivotante auxdites barres (56) de suspension de siège au niveau des parties de croisement, respectivement;
un moyen de liaison dans la direction de largeur formé par lesdits chaque pied avant, chaque pied arrière, chaque barre (55) de soutien de siège, chaque barre (56) de suspension de siège, et chaque barre de poussée pour relier des côtés gauche et droit du landau;
**caractérisé en ce qu'**il comprend en plus
un moyen (70) de verrouillage d'un état ouvert/fermé pour verrouiller un état ouvert et un état fermé du landau en empêchant le pivotement desdites barres de poussée (57) par rapport auxdits pieds avant (52), où
ledit moyen (70) de verrouillage d'un état ouvert/fermé comporte
un évidement (71) d'engagement côté pied avant situé sur l'extrémité supérieure desdits chaque pied avant (52) et pourvu le long d'un cercle autour dudit arbre de pivotement,
un évidement (72) d'engagement côté barre de poussée situé sur l'extrémité inférieure de ladite chaque barre de poussée (57) et pourvu le long d'un cercle autour dudit arbre de pivotement, et
un organe de verrouillage (73) ayant une protubérance d'engagement pour s'engager avec ledit évidement d'engagement (71) côté pied avant et ledit évidement d'engagement (72) côté barre de poussée, et pourvu de manière à pouvoir être déplacé entre une première position et une deuxième position le long dudit arbre de pivotement, où lorsque dans ladite première position, ledit organe de verrouillage (73) s'engage à la fois avec ledit évidement d'engagement (71) côté pied avant et ledit évidement d'engagement (72) côté barre de poussée afin d'empêcher le pivotement de ladite barre de poussée (57) par rapport audit pied avant (52), et lorsque dans ladite deuxième position, ledit organe de verrouillage (73) s'engage uniquement avec l'un dudit évidement d'engagement (71) côté pied avant et dudit évidement d'engagement (72) côté barre de poussée afin de permettre le pivotement de ladite barre de poussée (57) par rapport audit pied avant (52), ledit moyen de verrouillage (70) d'un état ouvert/fermé inclut en plus
un organe de sollicitation (74) pour solliciter ledit organe de verrouillage (73) vers ladite première position, et
un organe de pression (75) pour déplacer ledit organe de verrouillage (73) vers ladite deuxième position contre une force de sollicitation dudit organe de sollicitation (74).

2. Landau selon la revendication 1, dans lequel ledit organe de verrouillage (73) a une forme d'engrenage qui se centre autour dudit arbre de pivotement, et ledit évidement d'engagement (71) côté pied avant et ledit évidement d'engagement (72) côté barre de poussée ont un évidement en forme d'un engrenage qui se centre autour dudit arbre de pivotement.

3. Landau selon la revendication 1 ou 2, comprenant en plus un dispositif d'arrêt (77) pour empêcher une opération de pression dudit organe de pression (75).

4. Landau selon la revendication 3, dans lequel
ledit organe de pression (75) a une forme cylindrique entourant ledit arbre de pivotement et est maintenu de manière à pouvoir être déplacé dans un trou traversant formé dans l'extrémité inférieure de ladite barre de poussée (57), et
ledit dispositif d'arrêt (77) est maintenu par ledit organe de pression (75) de manière à pouvoir être déplacé entre une position où ledit dispositif d'arrêt (77) fait saillie d'une surface périphérique externe dudit organe de pression (75) et une position où ledit dispositif d'arrêt (77) se rétracte dans la surface périphérique externe dudit organe de pression (75), et lorsque dans ladite position de protubérance, ledit dispositif d'arrêt (77) empêche l'opération de pression dudit organe de pression (75), le landau comprenant en plus:
un ressort (78) pour solliciter ledit dispositif d'arrêt (77) vers ladite position de protubérance.
